# EUROPEAN PATENT SPECIFICATION

(11) **EP 2 681 948 B1**
(45) Date of publication and mention of the grant of the patent: **20.09.2017**
(21) Application number: 11705621.8
(22) Date of filing: 02.03.2011
(51) Int. Cl.: H04W 36/00, H04W 24/02

(54) **IMPROVED NEIGHBOUR CELL RELATION**
VERBESSERTE BEZIEHUNG ZWISCHEN NACHBARZELLEN
RELATION AMÉLIORÉE DE CELLULES VOISINES

(43) Date of publication of application: 08.01.2014
(73) Proprietor: Nokia Solutions and Networks Oy, 02610 Espoo (FI)
(72) Inventor: YE, Yinghua, Santa Clara California 95050 (US); LAKSHMI NARAYANAN, Ram Gopal, Sunnyvale CA 94089 (US)
(74) Representative: Borgström, Markus
(86) International application number: PCT/EP2011/053071
(87) International publication number: WO 2012/116741

(56) References cited:
- WO-A1-2006/101426
- US-A1- 2010 136 969

## Description

The present invention relates to an improved neighbour cell relation and, in particular, to the automatic management of neighbour cell relation in multi-operator environment.

In conventional mobile telecommunication networks the majority of traffic over or through the network was voice traffic, particularly in the so-called second generation (2G, 2.5G) mobile networks. The growth in voice traffic for a particular mobile network operator (MNO) was effectively proportional to the subscriber growth achieved by that MNO. Therefore, the MNO could predict with reasonable accuracy their expected subscriber growth and accordingly the expected voice traffic enabling the MNO to design for and implement the infrastructure required in their mobile network in order to satisfy the predicted traffic in their mobile network.

Due to relatively low complexity of the conventional mobile networks, a MNO could implement and manually configure their mobile network (as the network was low in complexity and the MNO only considered their own network architecture) in order to provide the subscribers' of the MNO a high level of service and availability.

With advances in mobile telecommunication and more complex next generation mobile networks becoming available, e.g. the so-called third generation (3G, 3.5G) and fourth generation (4G) mobile networks, then it is expected that there will be a substantial and significant increase in multimedia data traffic, for example, for video streaming, Internet access, Internet applications, Television broadcasts, and so on.

Thus, it will become more difficult for each MNO to predict and adequately provision the more complex next generation mobile networks in order to handle their subscribers' bandwidth, resource and capacity needs. The costs associated with purchasing and implementing the next generation network infrastructure mean that MNOs are facing several challenges in order to handle the expected increase in data traffic. Also, due to the more complex nature of the next generation mobile networks the conventional manner and process for manually configuring the nodes in the network is not going to be an efficient manner to configure the mobile networks.

Roaming agreements are conventionally known between MNOs in different geographical locations. For example, one MNO (a home MNO) that has a mobile network and coverage in one country may have an agreement with a second MNO (a visitor MNO) that has a mobile network and coverage in another country so that an end-user of the home MNO may utilise the infrastructure and resources of the visitor MNO whilst that end-user is abroad. In another example, the different geographical locations may be in one country, for example, in the United States of America the home MNO may have coverage in some states and may have an agreement with a visitor MNO that has coverage in other states that the home MNO does not have coverage in.

However, due to the expected growth in data traffic which will be expensive, for example, in terms of cost, infrastructure, resources and planning, MNOs in and covering the same geographical area may in the future implement a local roaming agreement enabling overflow in one MNO's mobile network to be handed over to a second MNO's mobile network if the second MNO's mobile network has sufficient capacity.

This new mode of cooperation between MNOs in the same geographical area will however present a series of challenges to be able to configure the mobile networks, implement in a secure manner, and so on. Thus, many of the embodiments of the present invention seek to address, at least in part, some or all of the challenges and issues that may arise from this new mode of cooperation.

Prior art which is related to this field of technology can be found in e.g. document US 2010/0136969 A1 disclosing neighbor cell list compilation methods and an apparatus and in document WO 2006/101426 A1 disclosing a method and system of radio communication.

According to aspects of the present invention there are provided a method, an apparatus and a computer program product according to the respective independent claims. Further details are set out in the dependent claims.

Embodiments of the present invention will now be described, by way of example only, and with reference to the accompanying drawings, in which:
Figure 1 shows a simplified block diagram in accordance with many of the embodiments of the present invention.
Figure 2 shows a simplified message flow diagram in accordance with many of the embodiments of the present invention.

As described hereinabove, due to the predicted substantial increase in data traffic in the next generation mobile networks, e.g. 3G, 3.5G and 4G, it may not be practical, in terms of cost, investment and time, for each Mobile Network Operator (MNO) covering a particular geographical area to provision their mobile network with the infrastructure and resources to always handle the maximum predicted data traffic. This is because data traffic to be transmitted over one MNO's mobile network will not be consistent and include peaks and troughs in terms of capacity and resources required.

As such, it would be too expensive and inefficient for one MNO to provision their mobile network with enough capacity and resources to handle the absolute peak data traffic necessary which would mean that the mobile network would have significant spare capacity at times of low levels of data traffic from the MNO's subscribers.

Also, one MNO may not have good coverage for certain spots or geographical locations whilst other MNO's may provide better coverage in those geographical locations. Therefore, it would also be very expensive for each MNO to provision a mobile network for all geographical areas for their subscribers.

Therefore, MNOs that provide network coverage to subscribers in the same or similar geographical locations may in the future collaborate or cooperate by implementing a form of local roaming agreement.

However, this new mode of cooperation may provide one or more challenges and issues that may need to be addressed. Thus, many of the embodiments of the present invention seek to address, at least in part, some or all of the challenges and issues described hereinabove.

A mobile network is typically a cellular network based on radio technology. In a simplified view of a typical mobile network it may include or be operationally connected to an access network where the access network enables subscriber devices, e.g. User Equipment (UE), to access the mobile network in order to receive and/or transmit traffic (e.g. voice traffic, data traffic, control traffic, and so on) over the mobile network. The access network may typically be operationally connected to a core circuit switched network and/or a packet switched network. The mobile network may further be operatively connected to any other appropriate networks, e.g. Intranets, Internet, Public Switched Telephone Network, and so on.

The expected significant increase in data traffic (on top of voice traffic) in mobile networks is expected to pose many challenges and issues to MNO's in order to maintain a high level of service and availability for their subscribers. The next generation of mobile networks is the so-called 4^{th} Generation (4G) networks which may be based on Long Term Evolution (LTE) radio technology.

Accordingly, many of the embodiments will be described in relation to LTE terminology and architecture. However, as a person skilled in the art will appreciate, the concepts and implementation may be applied to conventional and current mobile network technologies, for example, 2G, 2.5G, 3G, and so on as well as long term future mobile networks that may advance upon 4G.

In a simplified view of an access network of a mobile network, Node B (NB) is used to refer to hardware and associated control systems that enable an end-user device, e.g. a mobile telephone, to communicate with the mobile network. The end-user device interacts with the Node B in order to receive and transmit traffic to and from the mobile network. Node B is a term used in Universal Mobile Telecommunications System (UMTS) and in 4G LTE mobile networks it is often referred to as an Evolved Node B (eNB). In order to show that many of the embodiments are also applicable to other technology versions of mobile networks the eNB is equivalent to the Base Transceiver Stations (BTS) in Global System for Mobile Communication (GSM) mobile networks used in 2G and 3G architectures.

In a single geographical area, there will typically be more than one MNO serving or providing coverage in that geographical area. In a typical cellular mobile network a geographical area is usually divided into a series of cells where each cell will be served by an eNB. The cell defines the area covered or served by the eNB. Thus, in a particular geographical area cells, and associated eNBs, operated by or belonging to different MNOs may co-exist. The cells of a first MNO may be overlapping, adjacent or separate to cells of a second MNO but all of which may be considered as a neighbouring cells between the first and second MNO (and similarly between any number of different MNOs that may co-exist in a geographical area).

MNOs may agree to share resources, capacity and/or infrastructure in the form of a local roaming agreement thereby enabling subscribers of a first MNO to utilise the mobile network of one or more other MNOs covering the same geographical area. The eNB of first MNO may therefore need to be aware of neighbouring eNBs in the same geographical area by, for example, constructing a neighbour cell relation list to include eNBs of other MNOs.

Conventionally, user equipment (UE) would be used to enable one BTS/NB/eNB of the MNO of the subscriber of the UE to generate a list of neighbouring cells. Conventionally, the list of neighbouring cells only included the cells belonging to or operated by the MNO and therefore the MNO could control the process and ensure that only their cells are identified and included in the neighbouring cell list.

For example, conventionally when a UE is powered ON, it performs a cell selection (or reselection) process and location update (LU) procedure. The selected cell and its corresponding or associated BTS/NB/eNB are typically referred to as the serving cell and the serving BTS/NB/eNB respectively. The UE typically periodically monitors and measures the reference signal received power (RSRP) of neighbouring cells and generates a report that typically contains a list of neighbouring cells. The report may also contain information or parameters than identify the cell which may include, for example, a Physical Cell Identity (PCI) and a Global Cell ID (GID) of the neighbouring cells where the neighbouring cells typically broadcast the PCI and GID periodically.

The UE conventionally transmits the report to its serving BTS/NB/eNB of the cell that is currently serving the UE. Based on the report, e.g. the PCI and the GID, the BTS/NB/eNB of the MNO to which the UE is subscribed forms a list of neighbour cells that also belong to the same MNO.

This conventional process can only be utilised for determining neighbour cell relations for one MNO for their own mobile network. Therefore, in many of the embodiments of the present invention the process is improved upon in order to, at least in part, enable an Automatic Neighbour Relation (ANR) list to be generated and maintained which includes cells belonging to different MNOs.

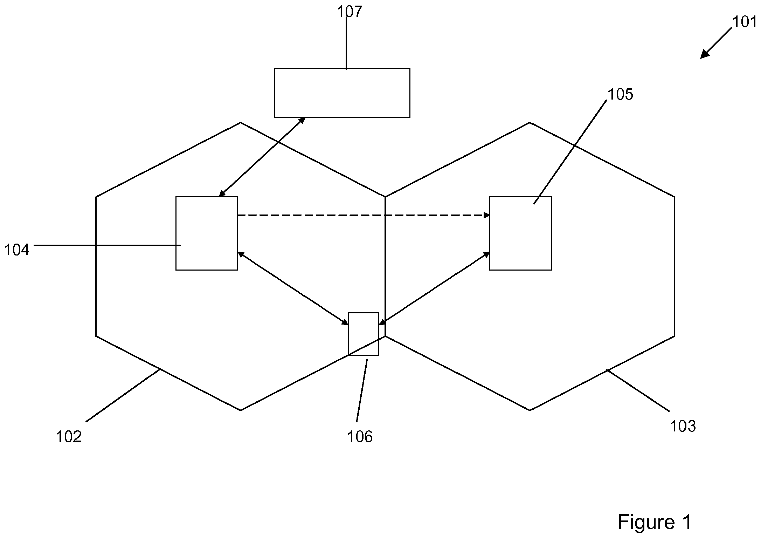

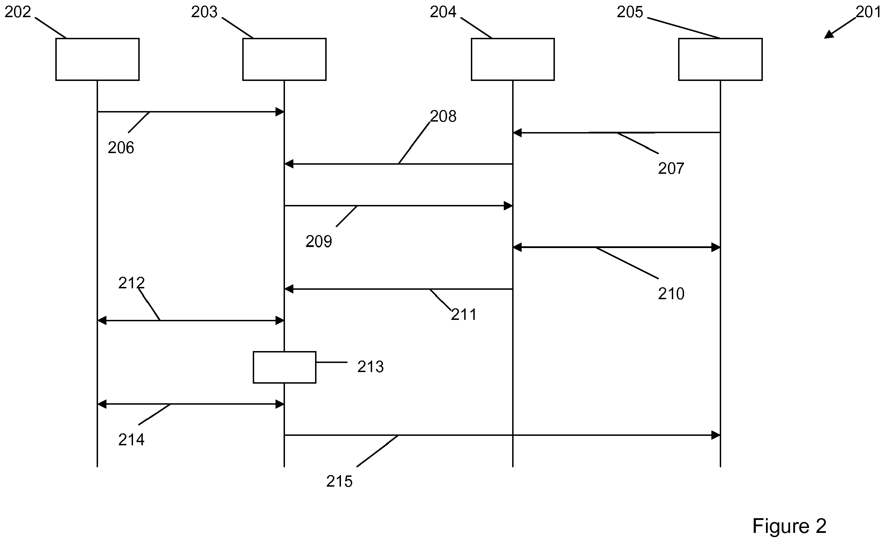

Many of the embodiments of the present invention will now be described with reference to Figures 1 and 2.

Figure 1 shows a simplified block diagram of architecture 101 in accordance with many of the embodiments of the present invention. Many of the embodiments will be described with reference to 4G LTE mobile networks, but as discussed hereinabove, many of the embodiments are backward compatible and applicable to 2G and 3G mobile networks.

In the architecture 101, cell 102 is served by eNB 104 and both cell 102 and eNB 104 are operated by a first MNO. Cell 103 which is served by eNB 105 and both cell 103 and eNB 105 are operated by a second and different MNO.

In order to simplify the block diagram shown in Figure 1, only two cells 102, 103 are shown belonging to different MNOs where the cells are adjacent. However, as will be appreciated there could be any number of MNOs in a particular geographical area where the cells of each MNO may be overlapping, adjacent or separate but all may be considered as neighbouring cells.

An end-user using a UE 106 is subscribed to the first MNO (which may be referred to as the home MNO) and has performed a cell selection process in order to locate and select cell 102, as cell 102 and associated eNB 104 belong to and/or are operated by the home MNO to which the UE 106 is subscribed.

In the example shown in Figure 1, eNB 104 is operatively connected with an Operation And Maintenance (OAM) system 107 of the home MNO. However, as will be appreciated by a person skilled in the art, the eNB 104 may be operatively connected to one or more other management systems (e.g. Network Management Systems, Element Management Systems), control systems (e.g. Dynamic Host Configuration Protocol (DCHP) server) or network entities either separately or any combination thereof.

In this example, a first MNO and a second MNO have implemented a local roaming agreement to enable subscribers of one MNO to utilise the resources and infrastructure of the other MNO based on, for example, specified conditions, service level agreements (SLA), and so on. This enables load balancing in the different MNOs mobile networks and to maintain a high level of service and availability for the end-users of each MNO. Thus, the eNB 104 of the home MNO should be aware of the ability to handover UE 106 to the eNB 105 of the second MNO. Accordingly, many of the embodiments seek to address the challenges and issues relating to performing Automatic Neighbour Relation to include cells of different MNOs between which roaming agreements are in place.
With reference to Figure 1, eNB 104 downloads, retrieves or receives a policy relating to roaming agreements or relations between the home MNO (the operator of eNB 104) and other MNOs covering the same or similar geographical area. In this example, eNB 104 may receive the policy from the OAM 107 during a configuration process of the eNB 104 when eNB 104 is powered up.
However, eNB 104 may receive the policy or an updated policy at any time from the OAM 107 where the policy may be transmitted to the eNB 104 in a push manner or a pull manner. In other words, the policy may be automatically transmitted from the OAM 107 to the eNB 104 on power up (e.g. in a push manner) or the OAM may wait for the eNB 104 to request the policy set before transmitting it to the eNB 104 (e.g. in a pull manner). Also, the eNB 104 may receive the policy from another source, system or server of the home MNO, for example, a management system, a DHCP server, and so on. By providing the serving eNB 104 with the policy relating to roaming agreements, the serving eNB 104 can then manage and automate neighbour relations in a multiple MNO environment. In many of the embodiments, the serving eNB 104 receives one or more reports from a UE 106 subscribed to the MNO operating cell 102 and communicating with eNB 104. In order to enable serving eNB 104 to perform ANR in a multi-MNO environment, the eNB 104 may use a PLMN ID, which forms part of a GID, in combination with the received policy relating to the roaming agreements to identify or determine neighbour cell(s) 103 belonging to or operated by another MNO with which the MNO of the serving eNB 104 has a roaming agreement.

The serving eNB 104 may additionally utilise geographical location coordinates of identified or determined neighbour eNBs 105 of neighbour cells in order to form both logical and physical associations of the network to further improve neighbour cell relations.

The improved ANR process according to many of the embodiments may further include a security mechanism during the neighbour discovery process to avoid attack from malicious, fraudulent or faked BTS/eNBs. For example, a security token may be applied during the discovery process so that the serving eNB (e.g. the eNB that is serving the UE providing the report) may verify or authenticate the eNBs that are provided in the report and have been discovered by the UE.

The ANR performed by the serving eNB 104 in multiple MNO environments (e.g. multiple MNOs operating and covering the same geographical area) may further classify or categorise the neighbouring eNBs 105 determined or identified into one or more categories. For example, the serving eNB 104 may categorise the neighbouring cells and associated eNBs into one of three categories, such as:
- Neighbouring eNBs belonging to the MNO.
- Neighbouring eNBs belonging to a different MNO but with which an active roaming agreement in place with the home MNO.
- Neighbouring eNBs belonging to a different MNO but with which there is no active roaming agreement in place.

The serving eNB 104 may utilise the automatic neighbour relations determined or identified based on the roaming agreement relationships between the MNOs to assist the serving eNB 104 to manage handovers of UE 106 from the serving cell to a neighbouring cell to improve load balancing between the multiple MNOs. The handovers may also improve mobility for the users or subscribers of an MNO as the UE 106 may also be handed over to a neighbouring cell operated by a different MNO if the UE 106 receives better signal quality from the neighbouring cell, and based on active roaming agreements and policies.

The first MNO (or home MNO) operating the serving eNB 104 may further set or provide handover preferences or priorities to the serving eNB 104 for handover of UEs 106 that are subscribed to the home MNO.

For example, the eNB 104 may be configured to include preferences or priorities so that a handover of the UE 106 from the serving eNB 105 to a neighbour eNB follows an order of, for example, performing handover of UE 106 to neighbouring eNBs from the home MNO first if there is capacity in the home MNO mobile network. If there is no neighbouring eNB from the same MNO, then the neighbouring eNB operated by a second MNO (e.g. a visitor MNO) having a roaming agreement relationship with the home MNO may be selected to handover UE 106 to, so as to enable load balancing or sharing in the mobile networks of the different MNOs.

If there are more than one different MNO covering the area of the serving eNB 104 then serving eNB 104 may further be configured with preferences or priorities as to which of the other MNOs is preferred. If a roaming agreement includes any SLA or Quality of Service provisions then the serving eNB 104 may further be configured with preferences or priorities for the handover criteria based on any SLAs or Quality of Service agreements.

Figure 2 shows a flow diagram 201 of the Automatic Neighbour Relation (ANR) process according to many of the embodiments. As with Figure 1, Figure 2 will be described in relation to LTE mobile networks, architecture and terminology. However, as described above, the concept of the embodiments of the present invention may also be applied to other network types and architecture.

An eNB 203, when powered up, may perform several set-up and configuration processes in order to be placed into an operational such that eNB 203 can be a serving eNB 203 for one or more UE 204 that are subscribed to the MNO operating eNB 203. One or more of the configuration processes may include or require communication with management systems of the MNO operating the eNB 203 in order to receive relevant configuration information and/or data.

In many of the embodiments, eNB 203 in step 206 receives roaming relation information during one or more of the configuration processes that eNB 203 performs. The roaming relation information may be needed by the eNB 203 to enable ANR for multi-MNO environments.

The eNB 203 may request the roaming from the MNO during the configuration process and receive 206 the roaming relation information from the MNO in response to the request, in other words in a pull manner. The eNB 203 may be automatically receive 206 the roaming relation information from the associated MNO and, in other words, receive 206 the roaming relation information in a push manner.

In the example shown in Figure 2, eNB 203 receives 206 the roaming information during the configuration process of the eNB 203 once it powers up. However, the eNB 203 may receive the roaming information from the associated MNO at any time, or receive updated roaming information at any time from the associated MNO during the lifetime of the eNB 203. For example, if the associated MNO implements a new roaming agreement with a second MNO then the MNO associated with the eNB 203 may transmit or provide updated roaming relation information to eNB 203.

The roaming relation information may, for example, include a list of home MNO PLMN IDs (as a single MNO may have multiple PLMN IDs), and a list of visiting MNO PLMN IDs where the visiting MNOs include those MNOs that the home MNO has roaming agreements with.

In the example shown in Figure 2, eNB 203 receives 206 the roaming relation information from an Operation and Maintenance (OAM) system 202 of the home MNO. In this example, the roaming relation information is included as part of the configuration data transmitted to eNB 203 once eNB 203 has initiated or set up a secured connection with OAM system 202 of the home MNO.

However, as will be appreciated, the roaming relation information may be obtained or received from one or more of the home MNO management systems or network entities. For example, eNB 203 may receive the roaming relation information from a DHCP server.

In the case of utilising a DHCP server, vendor specific address parameters can be configured at DHCP server where a home MNO PLMN ID list and a visitor MNO PLMN ID list may be configured as vendor specific address parameters. Once eNB 203 is powered up, it may transmit a DHCP request and, in response thereto, the DHCP server may return the roaming relation information to eNB 203.

Once eNB 203 has been configured and is operational then eNB 203 is ready to accept communication from and serve UE 204 where UE 204 is subscribed to the home MNO, e.g. the MNO that is operating eNB 203.

When UE 204 is in the geographical area of a cell associated with eNB 203, the UE 204 attaches with eNB 203 which becomes a serving eNB 203 as eNB 203 is now serving UE 204. UE 204 may then monitor or measure, for example, signal quality or signal strength of other eNBs that UE 204 may detect. UE 204 may also identify or detect the physical cell ID (PCI) of neighbouring eNBs by monitoring or listening to a Broadcast Control Channel (BCCH) of each detected neighbouring eNB. In the example shown in Figure 2, UE 204 receives 207 the PCI of eNB 205 as eNB 205 broadcasts its PCI via its BCCH.

In many of the embodiments, eNB 205 (and any other neighbouring eNB detected by UE 204) may also generate a security token which may be an encrypted value containing, for example, a timestamp, eNB 205 physical information and eNB 205 PLMN-ID. eNB 205 may broadcast the generated security token along with their PCI via the BCCH such that UE 204 receives 207 the security token with the PCI of eNB 205. The security token may enable the serving eNB 203 to verify and/or authenticate eNB 205 to ensure that no malicious or fraudulent node is pretending to be a legitimate eNB in a visitor MNO mobile network and broadcasting as a neighbour of the serving eNB 203.

Serving eNB 203 receives 208 a measurement report from UE 204 where the measurement report may include one or more PCI to identify different physical cells in the vicinity of UE 204.

The serving eNB 203 on receipt of the measurement report instructs 209 UE 204 to further report, e.g. provide an identification report, that includes a Global Cell ID (GID) for one or more of the PCIs included in the received measurement report. The serving eNB 203 may identify or select one or more of the PCIs for which the further report, e.g. an identification report, is required. The eNB 203 may instruct the UE 204 to provide the identification report via a message and may include the identified or selected one or more PCIs. If an identification report for all PCIs is required then the message may not identify any PCIs.

On receipt of the message 209, UE 204 obtains, receives, detects or identifies 210 the GID for each PCI, e.g. each detected neighbouring cell, by monitoring or listening to the BCCH of the detected neighbouring cell.

Serving eNB 203 receives 211 a further report, e.g. identification report, from UE 204 where the identification report includes the GID and may also include a security token for each PCI that UE 204 was instructed to obtain. The security token may have been received by the serving eNB 203 in the measurement report.

In this example, serving eNB 203 receives 208 a measurement report of PCIs relating to neighbouring cells detected by UE 204 by monitoring the BCCH of each neighbouring cell transmitted by a neighbouring eNB corresponding to the neighbouring cell. The serving eNB 203 then instructs 209 UE 204 to provide an identification report, which includes the GID of the neighbouring cells. The UE 204 generates the identification report by monitoring the BCCH of each neighbouring eNB and the identification report is received 211 by the serving eNB 203. Therefore, in this example, serving eNB 204 receives two reports where the content of each report may include information that UE 204 detects or identifies from the BCCH of neighbouring eNBs. However, separate reports may not be necessary as the serving eNB 205 may receive only one report from UE 204 that may include the PCI, the GID and the security token for the detected neighbouring cells and associated eNBs.

The serving eNB 204 extracts the security token and validates or authenticates the eNB 205 based on the received security token. The serving eNB 204 may authenticate or validate the neighbouring eNB 205 or may interact or cooperate with management systems of the home MNO in order to validate or authenticate the detected neighbouring eNB 205.

In this example, the serving eNB 205 interacts 212 with the OAM server 202 in order to determine whether the detected neighbouring cells and associated eNBs 205 are legitimate and authenticated.

The serving eNB 203 then extracts PLMN IDs from each of the GIDs received 211 in the identification report received from the UE 204.

The serving eNB 203, either independently or in cooperation with, for example, the OAM system 202, may identify whether the PLMN ID is a PLMN ID used by the home MNO. In other words, whether the neighbouring cell belongs to and is operated by the same MNO as the serving eNB 203.

If the PLMN ID is not one that the home MNO uses then the Serving eNB 203 may then identify or determine 213 whether the extracted PLMN ID is in the roaming relation information that was received 206 by the serving eNB 203. If the PLMN ID is in the roaming relation information then the MNO that uses the PLMN ID has a roaming agreement with the home MNO and may be considered a visitor MNO.

If the PLMN ID is not in the roaming relation information then the MNO that uses the PLMN ID does not have a roaming agreement with the home MNO.

The serving eNB 204, based on the identification or determination 213 may update a neighbour relation cell list maintained by serving eNB 203. Serving eNB 203 may transmit 214 the updated neighbour relation list to a management system of the home MNO, in this example, the OAM system 202, in order to receive an Internet Protocol (IP) address of the new detected neighbouring cells from the OAM system 202.

As described hereinabove, the example shown in Figure 2 is in relation to LTE networks and therefore, in this example, serving eNB 203 may establish 215 a new X2 interface with the detected neighbouring eNB 205. However, this optional step may not be in necessary in the case of other mobile network technologies and architectures.

Accordingly, many of the embodiments enable Automatic Neighbour Relation in multiple Mobile Network Operator environments. This has the advantage that load balancing of traffic in a multiple MNO environment can be achieved. A further advantage is that where the home MNO may have a blackspot or poor coverage inside a geographical area they serve then when a subscriber UE enters a blackspot, or simply the roaming partner MNO operated cell provides better signal quality, a handover may be performed to roaming partner MNO that has better coverage in the same geographical location. Therefore, the MNOs have the additional advantage of savings in CAPEX and OPEX by sharing mobile network infrastructure for their subscribers.

Therefore, each MNO may implement local roaming agreements in the same geographical areas so that the MNO can maintain a particular level of service for their subscribers without needing to provision and implement infrastructure and resources that can cope with the peak level traffic expected or predicted in the MNO mobile network. As discussed hereinabove, data traffic is expected to increase significantly meaning that the MNOs need new and improved ways of cooperating and operating in order to maintain subscribers' needs and expectations.

By enabling the determination or identification of neighbouring cells that are present in the same geographical area a UE can be offloaded or a handover performed to a visitor MNO mobile network if the home MNO mobile network does not have the resources or capacity due to high demand (or failure) and the visitor MNO mobile network has sufficient resources and capacity.

In many of the embodiments, security may be implemented in order to ensure that fake, fraudulent or malicious nodes cannot become trusted or added to a neighbour cell relation list.

Thus, many of the embodiments enable interoperability via ANR among multiple Mobile Network Operators, and may further facilitate the handover process in a multiple Mobile Network Operator environment.
The examples given above relate primarily to 4G networks and in particular mobile networks based on LTE radio technology. However, many of the embodiments are backward compatible to existing systems, and are applicable to all types of mobile network, for example, 2G, 2.5G, 3G, 4G, LTE, WiMax, sensor networks and so on. The principle of the embodiments is to enable ANR in a multiple Mobile Network Operator environment and is not dependent on the type of network entities or nodes. For example, the access node for a UE to receive and transmit traffic is an eNB in LTE networks, but the access node may also be a Base Transceiver Station (BTS), a Node B (NB) or any other network node or entity that enables a UE to transmit and/or receive traffic from a mobile network.
While many embodiments of the invention have been shown and described, it will be understood that such embodiments are described by way of example only. Numerous variations, changes and substitutions will occur to those skilled in the art without departing from the scope of the present invention as defined by the appended claims. Accordingly, it is intended that the following claims cover all such variations or equivalents as fall within the scope of the invention.

## Claims

1. A method comprising the steps of:
receiving (206) roaming relation information from a network operator system (202);
receiving (211) an identification report from a user equipment (106, 204) wherein said identification report includes one or more parameters relating to one or more neighbouring cells;
categorising (213) said one or more neighbouring cells based on said one or more parameters received from the user equipment and said roaming relation information received from the network operator system; and
generating a neighbour cell list based on said categorised one or more neighbouring cells.

2. The method as claimed in claim 1 further comprising:
receiving a measurement report from said user equipment wherein said measurement report includes one or more parameters relating to said one or more neighbouring cells; and
transmitting a message to said user equipment wherein said message instructs said user equipment to determine an identification report for at least one of said one or more neighbouring cells.

3. The method as claimed in claim 1 or 2 further comprising the steps of:
receiving a security token for each of said one or more neighbouring cells; and
authenticating each of said one or more neighbouring cells based on said security token relating to each of said one or more neighbouring cells.

4. The method as claimed in any one of the preceding claims further comprising the steps of:
transmitting said generated neighbour cell list to said network operator system; and
receiving from said network operator system an address for neighbour cells included in said neighbour cell list.

5. The method as claimed in any one of the preceding claims further comprising the steps of:
identifying from said neighbour cell list a neighbour cell; and
performing a handover of said user equipment to said neighbour cell.

6. An apparatus comprising:
a first input adapted to receive roaming relation information from a network operator system;
a second input adapted to receive an identification report from a user equipment (106, 204) wherein said identification report includes one or more parameters relating to one or more neighbouring cells;
a first processor adapted to categorise said one or more neighbouring cells based on said one or more parameters received by the second input and said roaming relation information received by the first input; and
a second processor adapted to generate a neighbour cell list based on said categorised one or more neighbouring cells.

7. The apparatus as claimed in claim 6 further comprising:
a third input adapted to receive a measurement report from said user equipment wherein said measurement report includes one or more parameters relating to said one or more neighbouring cells; and
a first output adapted to transmit a message to said user equipment wherein said message instructs said user equipment to determine an identification report for at least one of said one or more neighbouring cells.

8. The apparatus as claimed in claim 6 or 7 further receives a security token relating to said one or more neighbouring cells; and said apparatus further comprises:
an authenticator adapted to authenticate each of said one or more neighbouring cells based on said security token relating to each of said one or more neighbouring cells.

9. The apparatus as claimed in any one of claims 6 to 8 further comprising:
a third processor adapted to identify from said neighbour cell list a neighbour cell; and
a fourth processor adapted to perform a handover of said user equipment to said neighbour cell.

10. The apparatus as claimed in any one of claims 6 to 9 further comprising:
a second output adapted to transmit said generated neighbour cell list to said network operator system; and
a fourth input adapted to receive from said network operator system an address for neighbour cells included in said neighbour cell list.

11. A computer program product comprising computer readable executable code for performing the method according to any of claims 1 to 5.

## Patentansprüche

1. Verfahren, umfassend die folgenden Schritte:
Empfangen (206) von Roaming-Beziehungsinformationen von einem Netzwerkbetreibersystem (202);
Empfangen (211) einer Identifizierungsmeldung von einer Benutzereinrichtung (106, 204), wobei die Identifizierungsmeldung einen oder mehrere Parameter in Bezug auf eine oder mehrere Nachbarzellen umfasst;
Kategorisieren (213) der einen oder der mehreren Nachbarzellen basierend auf dem einen oder den mehreren Parametern, die von der Benutzereinrichtung empfangen werden, und den Roaming-Beziehungsinformationen, die vom Netzwerkbetreibersystem empfangen werden; und
Erzeugen einer Nachbarzellenliste basierend auf der einen oder den mehreren kategorisierten Nachbarzellen.

2. Verfahren nach Anspruch 1, ferner umfassend:
Empfangen einer Messungsmeldung von der Benutzereinrichtung, wobei die Messungsmeldung einen oder mehrere Parameter in Bezug auf die eine oder die mehreren Nachbarzellen umfasst; und
Senden einer Nachricht an die Benutzereinrichtung, wobei die Nachricht die Benutzereinrichtung anweist, eine Identifizierungsmeldung für mindestens eine der einen oder der mehreren Nachbarzellen zu bestimmen.

3. Verfahren nach Anspruch 1 oder 2, ferner umfassend die folgenden Schritte:
Empfangen eines Sicherheitstokens für jede der einen oder der mehreren Nachbarzellen; und
Authentifizieren der einen oder der mehreren Nachbarzellen basierend auf dem Sicherheitstoken in Bezug auf jede der einen oder der mehreren Nachbarzellen.

4. Verfahren nach einem der vorhergehenden Ansprüche, ferner umfassend die folgenden Schritte:
Senden der erzeugten Nachbarzellenliste an das Netzwerkbetreibersystem; und
Empfangen vom Netzwerkbetreibersystem einer Adresse für Nachbarzellen, die in der Nachbarzellenliste enthalten sind.

5. Verfahren nach einem der vorhergehenden Ansprüche, ferner umfassend die folgenden Schritte:
Identifizieren einer Nachbarzelle aus der Nachbarzellenliste; und
Durchführen eines Handovers der Benutzereinrichtung zur Nachbarzelle.

6. Vorrichtung, umfassend:
einen ersten Eingang, der zum Empfangen von Roaming-Beziehungsinformationen von einem Netzwerkbetreibersystem ausgelegt ist;
einen zweiten Eingang, der zum Empfangen einer Identifizierungsmeldung von einer Benutzereinrichtung (106, 204) ausgelegt ist, wobei die Identifizierungsmeldung einen oder mehrere Parameter in Bezug auf eine oder mehrere Nachbarzellen umfasst;
einen ersten Prozessor, der zum Kategorisieren der einen oder der mehreren Nachbarzellen basierend auf dem einen oder den mehreren Parametern, die von der Benutzereinrichtung empfangen werden, und den Roaming-Beziehungsinformationen, die vom Netzwerkbetreibersystem empfangen werden, ausgelegt ist; und
einen zweiten Prozessor, der zum Erzeugen einer Nachbarzellenliste basierend auf der einen oder den mehreren kategorisierten Nachbarzellen ausgelegt ist.

7. Vorrichtung nach Anspruch 6, ferner umfassend:
einen dritten Eingang, der zum Empfangen einer Messungsmeldung von der Benutzereinrichtung ausgelegt ist, wobei die Messungsmeldung einen oder mehrere Parameter in Bezug auf die eine oder die mehreren Nachbarzellen umfasst; und
einen ersten Ausgang, der zum Senden einer Nachricht an die Benutzereinrichtung ausgelegt ist, wobei die Nachricht die Benutzereinrichtung anweist, eine Identifizierungsmeldung für mindestens eine der einen oder der mehreren Nachbarzellen zu bestimmen.

8. Vorrichtung nach Anspruch 6 oder 7, die ferner einen Sicherheitstoken in Bezug auf die eine oder die mehreren Nachbarzellen empfängt, wobei die Vorrichtung ferner umfasst:
einen Authentifikator, der zum Authentifizieren der einen oder der mehreren Nachbarzellen basierend auf dem Sicherheitstoken in Bezug auf jede der einen oder der mehreren Nachbarzellen ausgelegt ist.

9. Vorrichtung nach einem der Ansprüche 6 bis 8, ferner umfassend:
einen dritten Prozessor, der zum Identifizieren einer Nachbarzelle aus der Nachbarzellenliste ausgelegt ist; und
einen vierten Prozessor, der zum Durchführen eines Handovers der Benutzereinrichtung zur Nachbarzelle ausgelegt ist.

10. Vorrichtung nach einem der Ansprüche 6 bis 9, ferner umfassend:
einen zweiten Ausgang, der zum Senden der erzeugten Nachbarzellenliste an das Netzwerkbetreibersystem ausgelegt ist; und
einen vierten Eingang, der zum Empfangen einer Adresse für Nachbarzellen, die in der Nachbarzellenliste enthalten sind, vom Netzwerkbetreibersystem ausgelegt ist.

11. Computerprogrammprodukt, umfassend computerlesbaren ausführbaren Code zum Durchführen des Verfahrens nach einem der Ansprüche 1 bis 5.

## Revendications

1. Un procédé comprenant les étapes suivantes :
la réception (206) d'informations de relation d'itinérance à partir d'un système d'opérateur de réseau (202),
la réception (211) d'un rapport d'identification à partir d'un équipement d'utilisateur (106, 204), ledit rapport d'identification comprenant un ou plusieurs paramètres se rapportant à une ou plusieurs cellules voisines,
la catégorisation (213) desdites une ou plusieurs cellules voisines en fonction desdits un ou plusieurs paramètres reçus à partir de l'équipement d'utilisateur et desdites informations de relation d'itinérance reçues à partir du système d'opérateur de réseau, et
la génération d'une liste de cellules voisines en fonction desdites une ou plusieurs cellules voisines catégorisées.

2. Le procédé selon la revendication 1 comprenant en outre :
la réception d'un rapport de mesure à partir dudit équipement d'utilisateur, ledit rapport de mesure comprenant un ou plusieurs paramètres se rapportant auxdites une ou plusieurs cellules voisines, et
la transmission d'un message audit équipement d'utilisateur, ledit message ordonnant audit équipement d'utilisateur de déterminer un rapport d'identification destiné à au moins une desdites une ou plusieurs cellules voisines.

3. Le procédé selon la revendication 1 ou 2 comprenant en outre les étapes suivantes :
la réception d'un jeton de sécurité pour chacune desdites une ou plusieurs cellules voisines, et
l'authentification de chacune desdites une ou plusieurs cellules voisines en fonction dudit jeton de sécurité se rapportant à chacune desdites une ou plusieurs cellules voisines.

4. Le procédé selon l'une quelconque des revendications précédentes comprenant en outre les étapes suivantes :
la transmission de ladite liste de cellules voisines générée audit système d'opérateur de réseau, et
la réception à partir dudit système d'opérateur de réseau d'une adresse destinée à des cellules voisines incluses dans ladite liste de cellules voisines.

5. Le procédé selon l'une quelconque des revendications précédentes comprenant en outre les étapes suivantes :
l'identification à partir de ladite liste de cellules voisines d'une cellule voisine, et
l'exécution d'un transfert dudit équipement d'utilisateur vers ladite cellule voisine.

6. Un appareil comprenant :
une première entrée adaptée de façon à recevoir des informations de relation d'itinérance à partir d'un système d'opérateur de réseau,
une deuxième entrée adaptée de façon à recevoir un rapport d'identification à partir d'un équipement d'utilisateur (106, 204), ledit rapport d'identification comprenant un ou plusieurs paramètres se rapportant à une ou plusieurs cellules voisines,
un premier processeur adapté de façon à catégoriser lesdites une ou plusieurs cellules voisines en fonction desdits un ou plusieurs paramètres reçus par la deuxième entrée et desdites informations de relation d'itinérance reçues par la première entrée, et
un deuxième processeur adapté de façon à générer une liste de cellules voisines en fonction desdites une ou plusieurs cellules voisines catégorisées.

7. L'appareil selon la revendication 6 comprenant en outre :
une troisième entrée adaptée de façon à recevoir un rapport de mesure à partir dudit équipement d'utilisateur, ledit rapport de mesure comprenant un ou plusieurs paramètres se rapportant auxdites une ou plusieurs cellules voisines, et
une première sortie adaptée de façon à transmettre un message audit équipement d'utilisateur, ledit message ordonnant audit équipement d'utilisateur de déterminer un rapport d'identification destiné à au moins une desdites une ou plusieurs cellules voisines.

8. L'appareil selon la revendication 6 ou 7 qui reçoit en outre un jeton de sécurité se rapportant auxdites une ou plusieurs cellules voisines, et ledit appareil comprenant en outre :
un dispositif d'authentification adapté de façon à authentifier chacune desdites une ou plusieurs cellules voisines en fonction dudit jeton de sécurité se rapportant à chacune desdites une ou plusieurs cellules voisines.

9. L'appareil selon l'une quelconque des revendications 6 à 8 comprenant en outre :
un troisième processeur adapté de façon à identifier à partir de ladite liste de cellules voisines une cellule voisine, et
un quatrième processeur adapté de façon à exécuter un transfert dudit équipement d'utilisateur vers ladite cellule voisine.

10. L'appareil selon l'une quelconque des revendications 6 à 9 comprenant en outre :
une deuxième sortie adaptée de façon à transmettre ladite liste de cellules voisines générée audit système d'opérateur de réseau, et
une quatrième entrée adaptée de façon à recevoir à partir dudit système d'opérateur de réseau une adresse destinée à des cellules voisines incluses dans ladite liste de cellules voisines.

11. Un produit de programme informatique comprenant du code exécutable lisible par un ordinateur destiné à l'exécution du procédé selon l'une quelconque des revendications 1 à 5.
